# EUROPÄISCHE PATENTSCHRIFT

(11) **EP 3 319 858 B1**
(45) Veröffentlichungstag und Bekanntmachung des Hinweises auf die Patenterteilung: **07.08.2019**
(21) Anmeldenummer: 16774933.2
(22) Anmeldetag: 29.09.2016
(51) Int. Cl.: B61C 17/00, B61F 1/08

(54) **BEFESTIGUNGSEINRICHTUNG FÜR EINEN GERÄTETRÄGER AN EINEM WAGENKASTEN EINES SCHIENENFAHRZEUGS**
SECURING DEVICE FOR A DEVICE SUPPORT ON A CAR BODY OF A RAIL VEHICLE
DISPOSITIF DE FIXATION POUR SUPPORT D'APPAREIL SUR UNE CAISSE D'UN VÉHICULE FERROVIAIRE

(30) Priorität: 01.10.2015 AT 508272015
(43) Veröffentlichungstag der Anmeldung: 16.05.2018
(73) Patentinhaber: Siemens Mobility GmbH, 1210 Wien (AT)
(72) Erfinder: SONNLEITNER, Uwe, 2620 Neunkirchen (AT); JÜLY, Martin, 2433 Margarethen/Moos (AT); HALLING, Philipp, 1120 Wien (AT)
(74) Vertreter: Deffner, Rolf
(86) Internationale Anmeldenummer: PCT/EP2016/073204
(87) Internationale Veröffentlichungsnummer: WO 2017/055408

(56) Entgegenhaltungen:
- WO-A1-2013/160062
- DE-A1- 19 916 304
- FR-A1- 2 928 330
- JP-A- 2000 108 899

## Beschreibung

### Technisches Gebiet

Die Erfindung betrifft eine Befestigungseinrichtung mit einem Geräteträger und einem Wagenkasten eines Schienenfahrzeugs.

### Stand der Technik

Unter dem Wagenkasten eines Schienenfahrzeugs sind viele der für den Betrieb des Schienenfahrzeugs erforderlichen Geräteträger (Unterflurgeräte) befestigt. Typischerweise werden sogenannte Traktionscontainer, Hilfsbetriebsumrichter, Druckluftmodule, Bremswiderstände, Batteriemodule, Klimageräte oder ähnliches montiert. Bei Wagenkästen aus Leichtmetall kann die Befestigung dieser Geräte an sogenannten C-Schienen, in welche Halterungen eingeschoben und fixiert werden erfolgen. Diese C-Schienen können als Teil eines Strangpreßleichtmetallprofils sehr einfach und kostengünstig ausgeführt werden, es sind dabei keine zusätzlichen Bauteile erforderlich.

Gebräuchlich sind auch direkt an den Wagenkasten geschweißte Konsolen an welchen die Geräteträger direkt mittels Schraubverbindungen befestigt werden. Moderne Schienenfahrzeuge, insbesondere Nahverkehrsfahrzeuge (U-Bahnen) werden häufig aus Leichtmetall aufgebaut, wobei jedoch die Unterflurgeräte und andere Anbauteile jedoch meist in Containern aus Stahl eingebaut sind. An den Fügestellen zwischen den Containern und dem Wagenkasten können somit sehr große mechanische Spannungen aufgrund der unterschiedlichen Wärmeausdehnungen der benachbarten Bauteile auftreten. Diese Spannungen können sogar zum Lockern oder Lösen der Verbindungsstelle führen. Alternative Befestigungsarten (z.B. Silentblöcke mit Gummilagerung) können meist aus Kosten- und Bauraumgründen nicht eingesetzt werden. Der Bauraum unter dem Wagenkasten soll meist möglichst optimal genutzt werden, sodass die Befestigung der Unterflureinbauten möglichst keinen Verlust an möglicher Höhe der Unterflureinbauten bedingen soll. Aus dem Stand der Technik sind elastische Verbindungstücke aus Stahlblech bekannt, welche die unterschiedlichen Wärmeausdehnungen aufnehmen können. Der Einsatz dieser Bauteile bedingt jedoch das Vorsehen von Konsolen am Wagenkasten, eine Montage an C-Schienen ist nicht möglich. Ebenso reduziert der Einsatz dieser Verbindungsstücke die mögliche Bauhöhe der Geräteträger und die Montage ist aufwendig, da die Geräteträger bei der Montage über ihre horizontale Endposition gehoben werden müssen um die Verbindungsstücke montieren zu können.

Aus der internationalen Patenanmeldung WO 2013/160062 A1 ist eine Befestigung für Unterflurgeräte bekannt, bei welcher ein in sich instabiles Stabwerk mittels einer Aussteifungsvorrichtung so versteift wird, dass die Komponenten des Stabwerks zueinander eine bestimmte Lage einnehmen und wobei Ausrüstungskomponenten an dem Stabwerk befestigbar sind und das Stabwerk zur Befestigung an C-Schienen ausgebildet ist.

### Darstellung der Erfindung

Der Erfindung liegt daher die Aufgabe zugrunde, eine Befestigungseinrichtung für Geräteträger an der Unterseite von Schienenfahrzeugwagenkästen anzugeben, welche die unterschiedlichen Wärmeausdehnungen von Leichtmetallwagenkästen und Stahlgeräteträgern aufnehmen können, dabei leicht zu montieren sind und an gebräuchlichen C-Schienen montiert werden können.

Die Aufgabe wird durch eine Befestigungseinrichtung mit einem Geräteträger und einem Wagenkasten eines Schienenfahrzeugs mit den Merkmalen des Anspruchs 1 gelöst. Vorteilhafte Ausgestaltungen sind Gegenstand untergeordneter Ansprüche.

Dem Grundgedanken der Erfindung nach wird eine Befestigungseinrichtung mit einem Geräteträger, bzw. ein Unterflurgerät und einem Wagenkasten eines Schienenfahrzeugs beschrieben, bei welcher der Wagenkasten an seiner Unterseite mit C-Nuten ausgestattet ist, und wobei der Geräteträger mit mindestens einem elastischen Verbindungsteil an einer C-Nut des Wagenkastens lösbar verbunden ist, und wobei der elastische Verbindungsteil zwei Bohrungen zur Herstellung einer Schraubverbindung zu je einem Nutenstein und eine Bohrung zur Herstellung einer Schraubverbindung mit einem Geräteträger aufweist, und wobei der elastische Verbindungsteil aus gebogenem Stahlblech hergestellt ist und zwei zueinander gegensinnig S-förmig ausgeformte Abschnitte umfasst, welche sich jeweils zwischen einer Bohrung zur Herstellung einer Schraubverbindung zu einem Nutenstein und der Bohrung zur Herstellung einer Schraubverbindung mit einem Geräteträger erstrecken.

Dadurch ist der Vorteil erzielbar, eine elastische Verbindung eines Wagenkastens mit einem Geräteträger herstellen zu können, welche in vertikaler Richtung den Bauraum optimal nutzen läßt und sich gut für die Verbindung von LeichtmetallWagenkästen mit Geräteträgern aus Stahl eignet.

Insbesondere ist vorteilhaft, dass die Befestigungseinrichtung bei Durchbiegung des Wagenkastens (beispielsweise durch die Passagierlast) übermäßige und wechselnde Zwangskräfte an den Befestigungsstellen verhindert, welche sonst zum Lösen der Befestigungen führen können. Durch die unmittelbare Befestigung der Geräteträger an dem Wagenkasten des Schienenfahrzeugs können auch die sonst erforderlichen Zwischen-Querträger entfallen, welche zur Entkopplung der Geräteträger von dem Wagenkasten eingesetzt werden.

Einfindungsgemäß ist ein elastischer Verbindungsteil vorgesehen, welcher zwischen dem Wagenkasten und dem Geräteträger angeordnet ist. Dabei ist je einzelne Verbindungsstelle ein elastischer Verbindungsteil anzuordnen. Typischerweise werden Geräteträger an vier oder mehr Verbindungsstellen mit dem Wagenkasten verbunden. Der elastische Verbindungsteil ist aus Stahlblech gefertigt und in eine Omega-Form gebogen. An den beiden Enden des elastischen Verbindungsteils ist jeweils eine Bohrung zur Herstellung einer Schraubverbindung zu dem Wagenkasten vorgesehen, in der Mitte des elastischen Verbindungsteils ist eine Bohrung zur Herstellung einer Schraubverbindung mit einem Geräteträger vorgesehen. Der Wagenkasten ist an seiner Unterseite erfindungsgemäß mit C-Nuten ausgestattet, in welchen Nutensteine schiebbar angeordnet sind. Diese Nutensteine sind mit dem elastischen Verbindungsteil verschraubbar gestaltet.

Die Formgebung des elastischen Verbindungsteils, insbesondere seine Omega-Form, gewährleistet eine hohe Tragfähigkeit bei gleichzeitiger Elastizität längs und quer zum Wagenkasten sowie einen geringen Widerstand gegen Verdrehungen. Die Geräteträger können dadurch von Vibrationen und Verwindungen des Wagenkastens effizient entkoppelt werden.

Der elastische Verbindungsteil definiert durch seine Form und die Eigenschaften seines Materials die elastischen Eigenschaften der Verbindungsstelle. Zur genauen Abstimmung der Schwingungseigenschaften, insb. der Eigenfrequenz können Ausnehmungen in dem elastischen Verbindungsteil vorgesehen werden. Werden diese Ausnehmungen in einem gebogenen Abschnitt des elastischen Verbindungsteils angeordnet, so ist dadurch eine besonders wirkungsvolle Beeinflussung der Federkonstante möglich.

In weiterer Fortbildung der Erfindung empfiehlt es sich, zwischen den Befestigungsstellen eines elastischen Verbindungsteils an einem Wagenkasten die C-Nut und ggf. weitere Teile des Wagenkastenbodens zu entfernen. Dadurch ist der Vorteil erzielbar, Geräteträger mit größerer Bauhöhe unterhalb des Wagenkastens anordnen zu können. In praktischen Ausführungsformen der Erfindung können die C-Nuten mittels Fräsung entfernt werden.

Dadurch können elastische Verbindungsteile eingesetzt werden, deren größte Vertikalerstreckung in eingebautem Zustand über die Befestigungsebene an den C-Nuten nach oben hinausragt. Solcherart kann die Befestigungsebene für den Geräteträger nach oben versetzt werden und dabei die elastischen Eigenschaften des elastischen Verbindungsteils beibehalten werden. Dies ermöglicht den Einsatz größerer Geräteträger bzw. einen größten Abstand der Geräteträger von dem Gleisbett.

Da dabei die Verbindungsstellen zwischen dem elastischen Verbindungsteil und dem Geräteträger meist nur mehr von unten zugänglich sind, ist eine Verdrehsicherung erforderlich um die entsprechende Schraubverbindung herstellen zu können. Es ist empfehlenswert, eine für diese Verbindung eingesetzte Schraube in einer Hülse zu führen, wobei ein Formschluß zwischen der Hülse und der Schraube gegeben ist. Weiters ist die Hülse gegenüber dem elastischen Verbindungsteil gegen Verdrehung zu sichern, wobei es empfehlenswert ist, dazu einen Formschluß der genannten Bauteile sicherzustellen. Insbesondere ist es empfehlenswert, den elastischen Verbindungsteil mit einer nichtrunden Ausnehmung (Bohrung) auszustatten und die Hülse mit einer korrespondierenden Ausformung auszustatten, welche in diese Ausnehmung eingreifen kann.

In weiterer Fortbildung der Erfindung ist es empfehlenswert, die Verbindungsstellen des elastischen Verbindungsteils mit dem Wagenkasten mit einer Schaubverbindung auszustatten, bei welcher die Andruckkraft der Schraube jeweils mittels einer Kraftverteilplatte in den elastischen Verbindungsteil eingeleitet wird. Diese Kraftverteilplatte ist gegenüber herkömmlichen Beilagscheiben besonders ausgeführt. Die Kraftverteilplatte ist im Wesentlichen quaderförmig mit einer Bohrung für die Durchführung einer Schraube, wobei diese Bohrung in Einbauposition der Kraftverteilplatte asymmetrisch angeordnet ist. Es ist wesentlich, die Lage der Bohrung in Richtung zur Mitte des elastischen Verbindungsteils zu versetzen, da solcherart kann auch bei Belastung des elastischen Verbindungsteils durch die Gewichts- und Trägheitskräfte eines Geräteträgers ein Lockerwerden der Schraubverbindung verhindert werden. Die Gewichtskräfte eines Geräteträgers bewirken ein Drehmoment in der Befestigungsstelle an dem Wagenkasten, wodurch die Schrauben für die Nutensteine mit Zugkräften beaufschlagt werden. Die Asymmetrie der Lage der Bohrung für diese Schraube bewirkt, dass der Verbindungsteil immer in Kontakt mit der C-Schiene verbleibt und keine Trennfuge (Aufklaffen) entsteht.

Weiters ist es vorteilhaft, die Kraftverteilplatte mit einer Verdrehsicherung auszustatten, wobei insbesondere eine formschlüssige Verdrehsicherung mittels einer Ausformung an der Kraftverteilplatte, welche in eine Ausnehmung des elastischen Verbindungsteils eingreift vorteilhaft ist. Dies gewährleistet, dass die Kraftverteilplatte sicher in der vorgesehenen Gebrauchslage eingebaut wird und sich auch beim Anziehen der Schraubverbindung nicht verdrehen kann, was die Funktion der Kraftverteilplatte stark einschränken würde.

### Kurzbeschreibung der Zeichnungen

Es zeigen beispielhaft:
- **Fig.1**: Befestigungseinrichtung Seitenansicht.
- **Fig.2**: Befestigungseinrichtung Schrägansicht.
- **Fig.3**: Befestigungseinrichtung Schrägansicht von unten.

### Ausführung der Erfindung

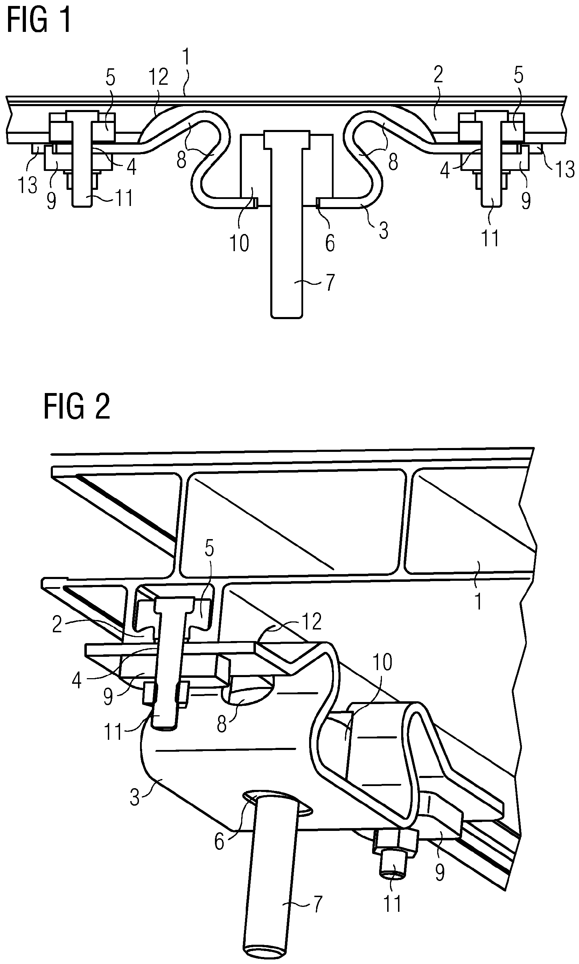

**Fig.1** zeigt beispielhaft und schematisch eine Befestigungseinrichtung in einer Seitenansicht. Es ist ein Schnitt durch einen Wagenkasten 1 eines Schienenfahrzeugs im Bereich der Befestigung eines Geräteträgers dargestellt. Der Wagenkasten 1 ist dabei aus Strangpreß-Leichtmetallprofilen aufgebaut und umfasst an seiner Unterseite eine C-Nut 2. In dieser C-Nut 2 sind zwei Nutensteine 5 eingebracht, mittels welcher ein elastischer Verbindungsteil 3 lösbar an dem Wagenkasten 1 befestigt ist. Zu dieser Befestigung ist eine Schraubverbindung, umfassend eine Schraube 11 mit korrespondierender Mutter und eine Kraftverteilplatte 9 vorgesehen. Die Kraftverteilplatte 9 bewirkt dabei eine gleichmäßige Verteilung der Klemmkraft zwischen dem elastischen Verbindungsteil 3 und der C-Nut 2, wodurch Spannungsspitzen verhindert werden und somit einem Versagen der C-Nut 2 vorgebeugt wird. Dabei weist der elastische Verbindungsteil 3 zwei Bohrungen 4 für die Nutensteinbefestigung auf. Die Kraftverteilplatte 9 ist zwecks Verdrehsicherung mit einer Ausformung ausgestattet, welche in einen Schlitz 13 für eine Verdrehsicherung des elastischen Verbindungsteils 3 eingreift. Der elastische Verbindungsteil 3 ist aus im Wesentlichen omegaförmig gebogenem Stahlblech gefertigt und weist zwei zueinander gegensinnig S-förmig ausgeformte Abschnitte auf. Der Wagenkasten 1 ist im Bereich zwischen den Befestigungsstellen an der C-Nut 2 mittels einer Fräsung 12 ausgenommen, wodurch der elastische Verbindungsteil 3 näher an den Wagenkasten 1 an den Boden des Wagenkastens 1 heranragen kann. Mittig des elastischen Befestigungsteils 3 ist eine Bohrung 6 für die Geräteträgerbefestigung vorgesehen, durch welche eine Schraube 7 geführt und mit einer Hülse 10 gegen Verdrehung gesichert ist. Die Bohrung 6 ist mit nichtrundem Querschnitt als Langloch ausgeführt, dabei stellt eine Ausformung der Hülse 10 einen Formschluß mit dem elastischen Verbindungsteil 3 her und sichert somit die Schraube 7 gegen Verdrehung. Der elastische Befestigungsteil 3 ist mit Ausnehmungen 8 ausgestattet, welche die Federkonstanten beeinflussen.

**Fig.2** zeigt beispielhaft und schematisch eine Befestigungseinrichtung in einer Schrägansicht. Es ist die Befestigungseinrichtung aus Fig.1 dargestellt, wobei in dieser Ansicht der Aufbau des den Boden des Wagenkastens 1 bildenden Hohlkammerprofils besonders verdeutlicht ist. Die C-Nut 2 ist einstückig mit dem Wagenkasten 1 hergestellt und im Bereich der Fräsung 12 unterbrochen. In dieser Ansicht sind die Ausnehmungen 8 des elastischen Befestigungsteils 3 besonders gut sichtbar.

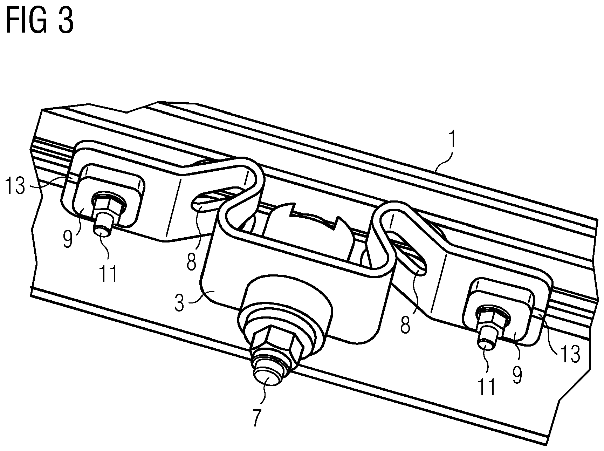

**Fig.3** zeigt beispielhaft und schematisch eine Befestigungseinrichtung in einer Schrägansicht von unten. Es ist die Befestigungseinrichtung aus den Fig. 1 und 2 in einer Schrägansicht gezeigt, wobei insbesondere die Asymmetrie der Schraube 11 für den Nutenstein in Bezug auf die Kraftverteilplatte 9 ersichtlich ist. Die Bohrung in der Kraftverteilplatte 9 für die Schraube 11 ist näher zu der der Mitte des elastischen Befestigungsteils 3 zugewandten Kante ausgeführt.

### Liste der Bezeichnungen

- 1: Wagenkasten
- 2: C-Nut
- 3: Elastischer Verbindungsteil
- 4: Bohrung für Nutensteinbefestigung
- 5: Nutenstein
- 6: Bohrung für Geräteträgerbefestigung
- 7: Schraube für Geräteträger
- 8: Ausnehmung
- 9: Kraftverteilplatte
- 10: Hülse
- 11: Schraube für Nutenstein
- 12: Fräsung
- 13: Schlitz für Verdrehsicherung

## Patentansprüche

1. Befestigungseinrichtung mit einem Geräteträger und einem Wagenkasten (1) eines Schienenfahrzeugs, wobei der Wagenkasten (1) an seiner Unterseite mit C-Nuten (2) ausgestattet ist,
**dadurch gekennzeichnet, dass**
der Geräteträger mit mindestens einem elastischen Verbindungsteil (3) an einer C-Nut (2) des Wagenkastens (1) lösbar verbunden ist, wobei
der elastische Verbindungsteil (3) zwei Bohrungen (4) zur Herstellung einer Schraubverbindung zu je einem Nutenstein (5) und eine Bohrung (6) zur Herstellung einer Schraubverbindung mit einem Geräteträger aufweist, und wobei der elastische Verbindungsteil (3) aus gebogenem Stahlblech hergestellt ist und zwei zueinander gegensinnig S-förmig ausgeformte Abschnitte umfasst, welche sich jeweils zwischen einer Bohrung (4) zur Herstellung einer Schraubverbindung zu einem Nutenstein und der Bohrung (6) zur Herstellung einer Schraubverbindung mit einem Geräteträger erstrecken.

2. Befestigungseinrichtung mit einem Geräteträger und einem Wagenkasten (1) eines Schienenfahrzeugs nach Anspruch 1,
**dadurch gekennzeichnet, dass** an der Verbindungsstelle die C-Nut (2) unterbrochen ist und der elastische Verbindungsteil (3) in den Bauraum (12) der unterbrochenen C-Nut (2) ragt.

3. Befestigungseinrichtung mit einem Geräteträger und einem Wagenkasten (1) eines Schienenfahrzeugs nach Anspruch 1 oder 2,
**dadurch gekennzeichnet, dass** der elastische Verbindungsteil (3) neben den Bohrungen (4) zur Herstellung einer Schraubverbindung zu Nutensteinen (5) und der Bohrung (6) zur Herstellung einer Schraubverbindung mit einem Geräteträger weitere Ausnehmungen (8) aufweist.

4. Befestigungseinrichtung mit einem Geräteträger und einem Wagenkasten (1) eines Schienenfahrzeugs nach Anspruch 3,
**dadurch gekennzeichnet, dass** diese weiteren Ausnehmungen (8) in einem gebogenen Abschnitt des elastischen Verbindungsteils (3) angeordnet sind.

5. Befestigungseinrichtung mit einem Geräteträger und einem Wagenkasten (1) eines Schienenfahrzeugs nach einem der Ansprüche 1 bis 4,
**dadurch gekennzeichnet, dass** in eingebauter Position des elastischen Befestigungsteils (3) die vertikale Lage der Ebene der Bohrungen (4) zur Herstellung einer Schraubverbindung zu je einem Nutenstein (5) zwischen der Ebene der Bohrungen (6) zur Herstellung einer Schraubverbindung mit einem Geräteträger und der größten Vertikalerstreckung des elastischen Befestigungsteils (3) liegt.

6. Befestigungseinrichtung mit einem Geräteträger und einem Wagenkasten (1) eines Schienenfahrzeugs nach einem der Ansprüche 1 bis 5, **dadurch gekennzeichnet, dass** die Bohrung (6) mit nichtrundem Querschnitt ausgeführt ist.

7. Befestigungseinrichtung mit einem Geräteträger und einem Wagenkasten (1) eines Schienenfahrzeugs nach einem der Ansprüche 1 bis 6, **dadurch gekennzeichnet, dass** an der Schraubverbindung (11) zu einem Nutenstein 5 ein Kraftverteilplatte (9) vorgesehen ist, welche eine Ausformung zur Herstellung des Formschlusses mit einer Ausnehmung (13) in dem elastischen Verbindungsteil aufweist.

8. Befestigungseinrichtung mit einem Geräteträger und einem Wagenkasten (1) eines Schienenfahrzeugs nach Anspruch 7, **dadurch gekennzeichnet, dass** die Kraftverteilplatte (9) im Wesentlichen quaderförmig ist und die Bohrung für die Schraubverbindung (11) außermittig, ich Richtung der Mitte des elastischen Verbindungsteils versetzt ist.

## Claims

1. Securing device with an equipment carrier and a car body (1) of a rail vehicle, wherein the car body (1) is equipped with C-grooves (2) on its underside,
**characterised in that**
the equipment carrier is connected in a detachable manner to at least one resilient connection part (3) on a C-groove (2) of the car body (1), wherein
the resilient connection part (3) has two boreholes (4) for establishing a screw connection with each sliding block (5) and one borehole (6) for establishing a screw connection with an equipment carrier, and wherein the resilient connection part (3) is made of bent steel plate and comprises two sections which are shaped into an S-shape opposite one another, which in each case extend between a borehole (4) for establishing a screw connection with a sliding block and the borehole (6) for establishing a screw connection with an equipment carrier.

2. Securing device with an equipment carrier and a car body (1) of a rail vehicle according to claim 1,
**characterised in that** the C-groove (2) is interrupted at the connection point and the resilient connection part (3) protrudes into the installation space (12) of the interrupted C-groove (2).

3. Securing device with an equipment carrier and a car body (1) of a rail vehicle according to claim 1 or 2,
**characterised in that** the resilient connection part (3), in addition to the boreholes (4) for establishing a screw connection with sliding blocks (5) and the borehole (6) for establishing a screw connection with an equipment carrier, has further recesses (8).

4. Securing device with an equipment carrier and a car body (1) of a rail vehicle according to claim 3,
**characterised in that** these further recesses (8) are arranged in a bent section of the resilient connection part (3) .

5. Securing device with an equipment carrier and a car body (1) of a rail vehicle according to one of claims 1 to 4,
**characterised in that** in the installed position of the resilient securing part (3), the vertical situation of the plane of the boreholes (4) for establishing a screw connection with each sliding block (5) lies between the plane of the boreholes (6) for establishing a screw connection with an equipment carrier and the largest vertical extension of the resilient securing part (3).

6. Securing device with an equipment carrier and a car body (1) of a rail vehicle according to one of claims 1 to 5,
**characterised in that** the borehole (6) is designed with a non-rounded cross-section.

7. Securing device with an equipment carrier and a car body (1) of a rail vehicle according to one of claims 1 to 6,
**characterised in that** there is provision at the screw connection (11) with a sliding block 5 for a force distribution plate (9), which has a shape for establishing the form-fit connection with a recess (13) in the resilient connection part.

8. Securing device with an equipment carrier and a car body (1) of a rail vehicle according to claim 7, **characterised in that** the force distribution plate (9) has a substantially cuboidal shape
and the borehole for the screw connection (11) is displaced eccentrically, in the direction of the centre of the resilient connection part.

## Revendications

1. Dispositif de fixation comprenant un support d'appareillage et une caisse (1) d'un véhicule ferroviaire, dans lequel la caisse (1) est équipée de rainures en C (2) au niveau de sa face inférieure,
**caractérisé en ce que**
le support d'appareillage est relié amovible à au moins une pièce de liaison élastique (3) au niveau d'une rainure en C (2) de la caisse (1), dans lequel
la pièce de liaison élastique (3) présente deux alésages (4) permettant de produire une liaison vissée par rapport à respectivement un coulisseau de rainure (5) et un alésage (6) permettant de produire une liaison vissée avec un support d'appareillage, et dans lequel la pièce de liaison élastique (3) est produite à partir d'une tôle d'acier recourbée et comprend deux sections à développement symétrique en S qui s'étendent respectivement entre un alésage (4) permettant de produire une liaison vissée par rapport à un coulisseau de rainure et l'alésage (6) permettant de produire une liaison vissée avec un support d'appareillage.

2. Dispositif de fixation comprenant un support d'appareillage et une caisse (1) d'un véhicule ferroviaire selon la revendication 1,
**caractérisé en ce que** la rainure en C (2) est interrompue au niveau de l'emplacement de liaison et la pièce de liaison élastique (3) fait saillie dans l'espace d'installation (12) de la rainure en C (2) interrompue.

3. Dispositif de fixation comprenant un support d'appareillage et une caisse (1) d'un véhicule ferroviaire selon la revendication 1 ou 2,
**caractérisé en ce que** la pièce de liaison élastique (3) présente d'autres évidements (8) en plus des deux alésages (4) permettant de produire une liaison vissée par rapport à des coulisseaux de rainure (5) et de l'alésage (6) permettant de produire une liaison vissée avec un support d'appareillage.

4. Dispositif de fixation comprenant un support d'appareillage et une caisse (1) d'un véhicule ferroviaire selon la revendication 3,
**caractérisé en ce que** lesdits autres évidements (8) sont agencés dans une section recourbée de la pièce de liaison élastique (3).

5. Dispositif de fixation comprenant un support d'appareillage et une caisse (1) d'un véhicule ferroviaire selon l'une quelconque des revendications 1 à 4,
**caractérisé en ce que**, lorsque la pièce de liaison élastique (3) est installée, la position en hauteur du plan des alésages (4) permettant de produire une liaison vissée par rapport à respectivement un coulisseau de rainure (5) se situe entre le plan des alésages (6) permettant de produire une liaison vissée avec un support d'appareillage et l'extension verticale la plus importante de la pièce de liaison élastique (3).

6. Dispositif de fixation comprenant un support d'appareillage et une caisse (1) d'un véhicule ferroviaire selon l'une quelconque des revendications 1 à 5,
**caractérisé en ce que** l'alésage (6) est réalisé de manière à présenter une section transversale non ronde.

7. Dispositif de fixation comprenant un support d'appareillage et une caisse (1) d'un véhicule ferroviaire selon l'une quelconque des revendications 1 à 6,
**caractérisé en ce qu'**au niveau de la liaison vissée (11) par rapport à un coulisseau de rainure (5) est prévue une plaque de répartition des efforts (9) qui présente un développement permettant de produire la complémentarité de forme avec un évidement (13) de la pièce de liaison élastique.

8. Dispositif de fixation comprenant un support d'appareillage et une caisse (1) d'un véhicule ferroviaire selon la revendication 7,
**caractérisé en ce que** la plaque de répartition des efforts (9) est de forme essentiellement parallélépipédique et l'alésage destiné à la liaison vissée (11) est décalé de manière excentrique en direction du centre de la pièce de liaison élastique.
